# EUROPÄISCHE PATENTSCHRIFT

(11) **EP 2 169 009 B1**
(45) Veröffentlichungstag und Bekanntmachung des Hinweises auf die Patenterteilung: **25.05.2011**
(21) Anmeldenummer: 08165050.9
(22) Anmeldetag: 24.09.2008
(51) Int. Cl.: C09B 5/14, C09D 11/00

(54) **Anthrapyridon-Farbstoffe, ihre Herstellung und Verwendung**
Anthrapyridone dyes, their preparation and their use
Colorants anthrapyridones, leur préparation et leur utilisation

(43) Veröffentlichungstag der Anmeldung: 31.03.2010
(73) Patentinhaber: ILFORD Imaging Switzerland GmbH, 1723 Marly 1 (CH)
(72) Erfinder: Baettig, Kurt, 1724 Le Mouret (CH); Jan, Gérald, 1752 Villars-sur-Glâne (CH)

(56) Entgegenhaltungen:
- EP-A- 0 927 747
- DATABASE WPI Week 200429 Thomson Scientific, London, GB; AN 2004-307718 XP002520597 -& JP 2003 335989 A (KONICA CORP) 28. November 2003 (2003-11-28)

## Beschreibung

### Technisches Gebiet

Die Erfindung bezieht sich auf neue Anthrapyridon-Farbstoffe und ihre Salze, ein Verfahren zu ihrer Herstellung, ihren Einsatz in Färbe- und Druckverfahren sowie auf Farbstoffpräparationen, die diese Farbstoffe enthalten, insbesondere wässrige Tinten für den Tintenstrahldruck.

### Stand der Technik

Der Tintenstrahldruck hat auf vielen Gebieten die klassischen Bildwiedergabeverfahren abgelöst oder ergänzt. Obwohl es einen beachtlichen Reifegrad erreicht hat sind weitere Verbesserungen nötig vor allem im graphischen und im photographischen Bereich. Heutige Tintenstrahldrucker müssen dort auf verschiedenste Aufzeichnungsmaterialien wie beispielsweise Aufzeichnungsmaterialien auf Polymerbasis oder auf schnell trocknenden nanoporösen Aufzeichnungsmaterialien optimal drucken können. In diesen Bereichen spielen die Haltbarkeit gegenüber Licht und oxidativen Gasen (Ozon, NO_{X}), aber auch ein grosses Volumen des Farbraums (Gamut) der auf solche Art hergestellten Bilder eine entscheidende Rolle. Das ist nur mit einem auf diese Aufzeichnungsmaterialien fein abgestimmten System von Tinten (respektive den darin enthaltenen Farbstoffen) möglich.

Die meisten erhältlichen und heute in Tinten für den Tintenstrahldruck eingesetzten Purpurfarbstoffe erfüllen zusammen mit polymeren und nanoporösen Aufzeichnungsmaterialien nicht alle an sie gestellten Anforderungen. Die heute in ihnen verwendeten Purpurfarbstoffe haben nicht alle notwendigen Eigenschaften, wie einen geeigneten Farbton, eine sehr hohe Brillanz, eine gute Lichtechtheit, eine gute Ozonbeständigkeit, keine Ablagerungen auf der Oberfläche des Aufzeichnungsmaterials ("Bronzing"), eine gute Diffusionsfestigkeit sowie eine ausgezeichnete Löslichkeit und niedrige Viskosität in den hauptsächlich wässrigen Aufzeichnungsflüssigkeiten.

Obwohl schon eine ganze Anzahl verschiedener Purpurfarbstoffe zur Verwendung im Tintenstrahldruck vorgeschlagen worden sind, vermag noch keiner alle vorhin genannten Anforderungen zu erfüllen.

Die Purpurfarbstoffe der Formel (I) (Beispiel Nr. 25) 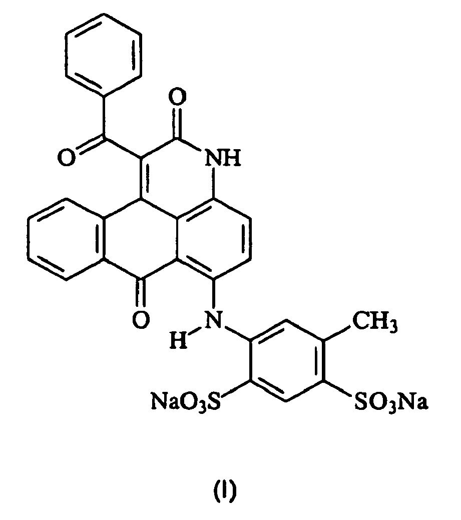 und der Formel (II) (Beispiel Nr. 27) 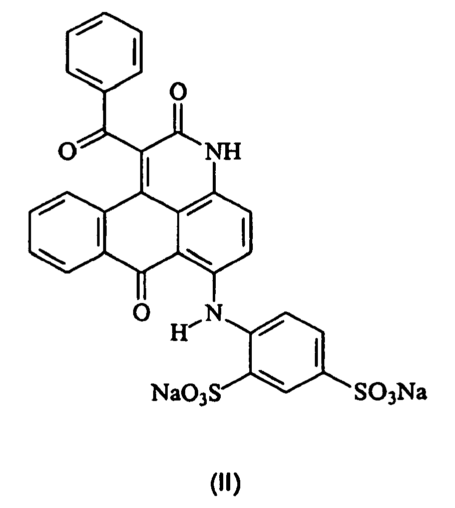 werden in der Patentanmeldung WO 98/11'167auch veröffentlicht gemäss Artikel 158(3) EPÜ als EP 0'927'747, beschrieben.

In der Patentanmeldung JP 2003-335'989 werden purpurfarbige Aufzeichnungsflüssigkeiten für den Tintenstrahldruck mit ausgezeichneter Lichtechtheit und Gebrauchsstabilität beschrieben, welche Anthrapyridon-Farbstoffe der Formel (IX) 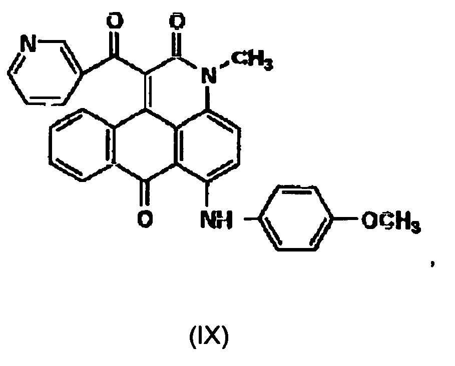 der Formel (X) 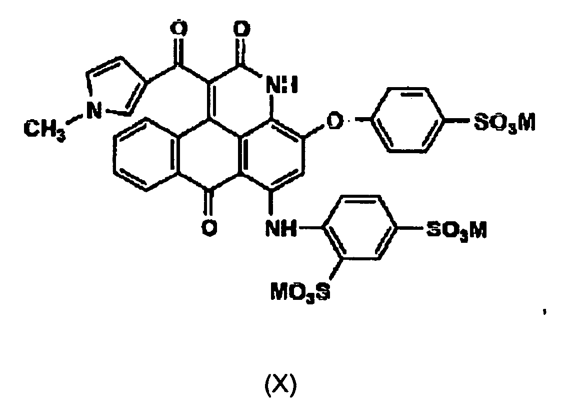 der Formel (XI) 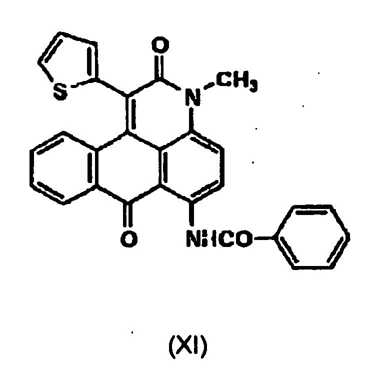 oder der Formel (XII) 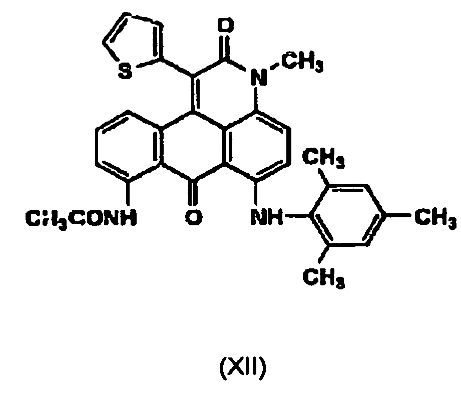 enthalten können.

Diese Anthrapyridon-Farbstoffe des Standes der Technik vermögen in der Praxis im Tintenstrahldruck nicht alle an sie gestellten Anforderungen zu erfüllen, wenn es darum geht, mit Ihnen Tinten herzustellen, die auf allen möglichen Aufnahmematerialien wie unbeschichtetem oder beschichtetem Papier, beschichtetem oder unbeschichtetem, opakem oder durchsichtigem Kunststoffträger purpurne Bilder oder Färbungen mit möglichst reinem und blauem Farbton (L*a*b*-Werte mit hohen b*-Werten) zu erzeugen und zudem in wässrigen Tinten keine Viskositätserhöhung verursachen.

Farbstoffe für solche Tinten müssen eine gute Löslichkeit in der mehrheitlich wässrigen Tintenflüssigkeit aufweisen, sie müssen ins Aufnahmematerial eindringen und dürfen keine Aggregation an der Oberfläche des Aufnahmematerials zeigen ("Bronzing"). Sie müssen Bilder mit einer hohen optischen Dichte, einer guten Wasserfestigkeit, einer guten Lichtechtheit und einer guten Lagerstabilität auch unter ungünstigen Bedingungen ergeben. Sie müssen in der Tinte stabil sein, auch wenn diese lange Zeit unter ungünstigen Bedingungen gelagert wird.

Verschiedene Zusammensetzungen für Tinten sind vorgeschlagen worden. Typische Tinten enthalten einen oder mehrere Farbstoffe oder Pigmente, Wasser, organische Hilfslösungsmittel und andere Zusätze.

Die Tinten müssen die folgenden Anforderungen erfüllen:
(1) Die Tinte ergibt Bilder hochstehender Qualität auf allen möglichen Aufnahmematerialien.
(2) Die Tinte ergibt Bilder mit guter Wasserfestigkeit.
(3) Die Tinte ergibt Bilder mit guter Lichtbeständigkeit.
(4) Die Tinte ergibt Bilder mit hervorragender Abriebfestigkeit.
(5) Die Tinte ergibt Bilder mit hervorragender Lagerbeständigkeit bei hoher Temperatur und Feuchtigkeit.
(6) Die Tinte verstopft die Tintenstrahldruckerdüsen nicht, auch wenn diese längere Zeit während Druckpausen nicht abgedeckt sind.
(7) Die Tinte kann lange Zeit gelagert werden, ohne dass ihre Qualität abnimmt.
(8) Die physikalischen Eigenschaften der Tinte, wie Viskosität, Leitfähigkeit und Oberflächenspannung liegen alle innerhalb vorgegebener, für die Anwendung geeigneter Grenzen.
(9) Die Tinte muss ungiftig, unbrennbar und unschädlich sein.

### Beschreibung der Erfindung

Ziel der Erfindung ist die Bereitstellung neuer, gut wasserlöslicher Anthrapyridon-Farbstoffe mit möglichst reinen, bläulichen purpurnen Farbtönen, die gleichzeitig lichtecht und ozonbeständig sind. Sie ergeben Bilder oder Färbungen mit allgemein guten Eigenschaften, insbesondere im Tintenstrahldruck, wo sie zusammen mit grünstichigen Blaugrünfarbstoffen, wie sie beispielsweise in der Patentanmeldung EP 1'867'685 beschrieben werden, und zitronengelben Gelbfarbstoffen, wie sie beispielsweise in der Patentanmeldung EP 0'755'984 beschrieben werden, Bilder mit maximaler Farbwiedergabe ergeben.
Ein weiteres Ziel der Erfindung ist die Bereitstellung von flüssigen Farbstoffpräparationen, insbesondere von Tinten für den Tintenstrahldruck, die auf allen möglichen Aufnahmematerialien wie unbeschichtetem oder beschichtetem Papier, beschichtetem oder unbeschichtetem, opakem oder durchsichtigem Kunststoffträger eine spektral unveränderte Farbe ergeben.
Ein weiteres Ziel der Erfindung ist die Bereitstellung von Tinten, die alle vorhin erwähnten Anforderungen erfüllen.

Die vorliegende Erfindung bezieht sich auf neue Anthrapyridon-Farbstoffe der allgemeinen Formel (III) 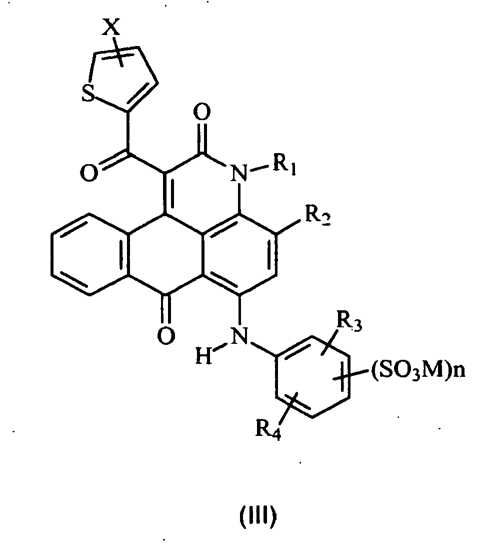 worin
- X: für Wasserstoff, Chlor, Brom oder einen geradkettigen oder verzweigten Alkylrest mit 1 bis 8 Kohlenstoffatomen steht,
- R₁: für Wasserstoff oder einen geradkettigen oder verzweigten Alkylrest mit 1 bis 8 Kohlenstoffatomen steht,
- R₂: für Wasserstoff, SO₃M, Chlor, Brom, einen unsubstituierten oder substitu- ierten aliphatischen Alkoxylrest mit bis zu 12 Kohlenstoffatomen, wobei die Substituenten aus der Gruppe bestehend aus COOM, OH, OCH₃, Ha- logen, COOCH₃ und COOCH₂CH₃ ausgewählt werden, oder einen aro- matischen Aryloxylrest, wobei die Substituenten aus der Gruppe beste- hend aus COOM, SO₃M, OCH₃, Halogen, COOCH₃ und COOCH₂CH₃ ausgewählt werden, steht;
- R₃: für Fluor, Chlor, Brom, NH₂, einen Alkylrest oder einen Alkoxylrest mit je 1 bis 6 Kohlenstoffatomen, einen unsubstituierten aliphatischen Amidrest oder Sulfonamidrest mit bis zu 12 Kohlenstoffatomen oder einen unsubsti- tuierten oder substituierten aromatischen Amidrest oder Sulfonamidrest mit bis zu 20 Kohlenstoffatomen, wobei die Substituenten aus der Gruppe bestehend aus COOM, SO₃M, OCH₃, CH₃, CH₂CH₃, Cl, Br, COOCH₃ und COOCH₂CH₃ ausgewählt werden, steht;
- R₄: für Wasserstoff steht;
- n: den Wert 2 annimmt
und
- M: für Wasserstoff, ein Metallkation oder ein Ammoniumkation, das gegebe- nenfalls einen oder mehrere Alkylreste oder substituierte Alkylreste oder Hydroxyalkoxyalkylreste mit jeweils 1 bis 18 Kohlenstoffatomen aufweist, steht.

Bevorzugt sind Anthrapyridon-Farbstoffe, bei denen R₃, R₄, M und n die gleiche Bedeutung wie vorher angegeben haben,
- X: für Wasserstoff, Chlor oder Brom steht;
- R₁: für Wasserstoff oder CH₃ steht
und
- R₂: für Wasserstoff, SO₃M oder einen Phenoxylrest steht.

Besonders bevorzugt sind Anthrapyridon-Farbstoffe, bei denen X, R₁R₂, R₄ und n die gleiche Bedeutung wie vorher angegeben haben,
- R₃: für Fluor, Chlor, Brom, NH₂, einen Alkylrest oder einen Alkoxylrest mit je 1 bis 4 Kohlenstoffatomen, für einen unsubstituierten Amidrest oder Sulfon- amidrest mit bis zu 12 Kohlenstoffatomen steht
und
- M: für Wasserstoff, ein Alkalimetallkation (Li, Na oder K), ein Erdalkalimetall- kation (Mg oder Ca) oder ein Ammoniumkation, das gegebenenfalls einen oder mehrere Alkylreste mit 1 bis 4 Kohlenstoffatomen oder mit OH sub- stituierte Alkylreste mit 1 bis 6 Kohlenstoffatomen aufweist, steht.

Die hergestellten Farbstoffe der allgemeinen Formel (III) und der Referenzfarbstoff (10) sind zusammen mit ihrem Absorptionsmaximum in wässriger Lösung in Tabelle 1 zusammengestellt:

**Tabelle 1**

| Verbindung Nr. | R₁ | n/Position | R₃/Position | R₄/Position | X | M | λₘₐₓ (nm) |
|---|---|---|---|---|---|---|---|
| 10 | H | 2/2,5 | H | H | H | K | 531 |
| 11 | H | 2/4,6 | OCH₃/3 | H | H | K | 532 |
| 12 | H | 2/4,6 | CH₃/3 | H | H | Na | 533 |
| 13 | H | 2/3,6 | CH₃/4 | H | H | K | 534 |
| 14 | CH₃ | 2/4,6 | CH₃/3 | H | H | Na | 533 |
| 15 | H | 2/4,6 | NH₂/3 | H | H | H | 534 |
| 16 | H | 2/4,6 | NHCOCH₃/3 | H | H | K | 529 |
| 17 | H | 2/4,6 | NHCHO/3 | H | H | Na | 528 |

Die Verbindungen der allgemeinen Formel (III) können als freie Säuren oder als anorganische oder organische Salze dieser Säuren vorliegen. Vorzugsweise liegen sie in Form ihrer Alkali- oder Ammoniumsalze vor, wobei das Ammoniumkation substituiert sein kann. Beispiele solcher substituierter Ammoniumkationen sind 2-Hydroxyethylammonium, Bis-(2-hydroxyethyl)-ammonium, Tris-(2-hydroxyethyl)-ammonium, Bis-(2-hydroxyethyl)-methyl-ammonium, Tris-[2-(2-methoxyethoxy)-ethyl]-ammonium, 8-Hydroxy-3,6-dioxaoctylammonium und Tetraalkylammonium wie beispielsweise Tetramethylammonium oder Tetrabutylammonium.

Weiter betrifft die Erfindung nicht nur reine Anthrapyridon-Farbstoffe der allgemeinen Formel (III), sondern auch Gemische dieser Verbindungen.

Die Erfindung betrifft weiterhin ein Verfahren zur Herstellung der erfindungsgemässen Anthrapyridon-Farbstoffe der Formel (III), das dadurch gekennzeichnet ist, dass
ein β-Ketoester der allgemeinen Formel (IV) 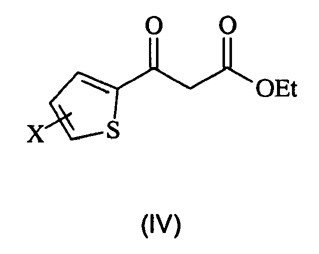 worin X die gleiche Bedeutung wie vorher angegeben hat, mit einer Verbindung der Formel (V), 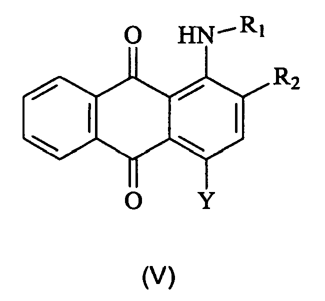 worin R₁ und R₂ die gleiche Bedeutung wie vorher angegeben haben und Y für Chlor, Brom oder eine andere Abgangsgruppe steht, unter Bedingungen umgesetzt wird, dass die Anthrapyridone der Formel (VI) gebildet werden, 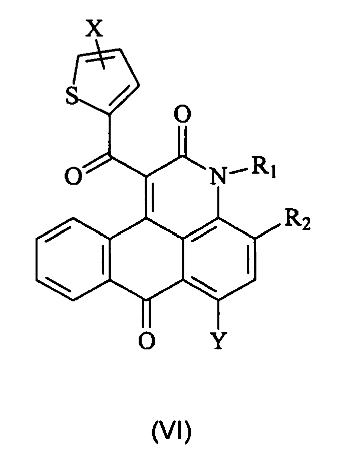 welche anschliessend mit Anilinen der allgemeinen Formel (VII), worin R₃, R₄ und n die gleiche Bedeutung wie vorher angegeben haben, 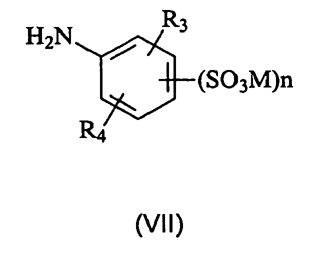 unter Bedingungen umgesetzt werden, dass die Anthrapyridon-Farbstoffe der allgemeinen Formel (III) gebildet werden.

Die erfindungsgemässen Farbstoffe der allgemeinen Formel (III) färben cellulosehaltige Materialien, Papier, Baumwolle und Viskose sowie Leder und Wolle mit guten Nass- und Lichtechtheiten.
Die Farbstoffe können nach allen in der Papier- und Textilindustrie für Substantivfarbstoffe gebräuchlichen Verfahren verwendet werden, insbesondere in der Massen- wie in der Oberflächenbehandlung von Papier für geleimte oder ungeleimte Sorten. Sie können auch in der Garn- und Stückfärberei von Baumwolle, Viskose und Leinen nach dem Ausziehverfahren oder im kontinuierlichen Verfahren angewandt werden.

Die Erfindung betrifft weiter flüssige Farbstoffpräparationen, die mindestens einen Farbstoff der allgemeinen Formel (III) enthalten. Diese Anwendungsform ist insbesondere beim Färben von Papier bevorzugt. Die Herstellung von stabilen, flüssigen, vorzugsweise wässrigen, konzentrierten Färbepräparaten kann auf allgemein bekannte Weise erfolgen, vorteilhaft durch Lösen in geeigneten Lösungsmitteln. Von besonderem Vorteil ist die Herstellungsmöglichkeit solcher stabilen, wässrig-konzentrierten Präparationen im Zuge der Farbstoffsynthese selbst ohne Zwischenisolierung des Farbstoffs, beispielsweise nach einer Entsalzung der Reaktionslösung durch Diafiltration.

Farbstoffe oder Mischungen von Farbstoffen der allgemeinen Formel (III) sind ausgezeichnete Farbstoffe zur Herstellung von Tinten für den Tintenstrahldruck. Die erfindungsgemässen Farbstoffe der allgemeinen Formel (III) können gut mit anderen Purpurfarbstoffen, insbesondere solchen, wie sie beispielsweise in den Patentanmeldungen EP 0'754'207, EP 1'160'291, EP 1'219'682 und EP 1'403'328 beschrieben worden sind, kombiniert werden.

Die erfindungsgemässen Farbstoffe der allgemeinen Formel (III) spannen in Tintensätzen für den Tintenstrahldruck zusammen mit Gelbfarbstoffen, wie sie beispielsweise in den Patentanmeldungen EP 0'755'984 und EP 1'882'723 beschrieben werden und Blaugrünfarbstoffen, wie sie beispielsweise in der Patentanmeldung EP 1'867'685 beschrieben werden, einen optimalen Farbraum auf. Weiter haben die in den Tinten des Farbstofftripels verwendeten Farbstoffe ähnliche Licht- und Ozonbeständigkeit auf typischen Aufnahmematerialen.

Eine typische Tinte enthält eine oder mehrere der erfindungsgemässen Verbindungen in einem flüssigen wässrigen Lösungsmittel. Die Tinte enthält 0.5 bis 20 Gewichtsprozent, vorzugsweise 0.5 bis 8 Gewichtsprozent dieser Verbindungen, bezogen auf das Gesamtgewicht der Tinte. Das flüssige Lösungsmittel besteht vorzugsweise aus Wasser oder aus einer Mischung von Wasser und mit Wasser mischbaren organischen Lösungsmitteln. Geeignete Lösungsmittel sind beispielsweise in den Patenten US 4'626'284, US 4'703'113 und US 4'963'189 und den Patentanmeldungen GB 2'289'473 und EP 0'425'150 und EP 0'597'672 beschrieben worden.

Die vorliegende Erfindung wird durch die folgenden Beispiele näher beschrieben, ohne dass dadurch die beanspruchten Verbindungen in irgendeiner Weise eingeschränkt werden.

### Beispiele

### Synthesebeispiel (Referenzbeispiel)

Der Anthrapyridon-Farbstoff (10) aus Tabelle 1, worin M für K steht, wurde folgendermassen hergestellt:

### Herstellung der bromierten Anthrapyridonkomponente der Formel (VIII):

75.5 g (0.25 Mol) 1-Amino-4-bromanthrachinon (erhältlich bei Sigma-Aldrich GmbH, Buchs, Schweiz), 59.5 g (0.3 Mol) Ethyl-3-oxo-3-(thiophen-2-yl)propanat (erhältlich bei Bosche Scientific LLC, New Brunswick, USA), 3.9 g (0.04 Mol) Kaliumacetat und 125 ml 1,2-Dichlorbenzol wurden unter Stickstoff 22 Stunden bei einer Temperatur von 140° C gerührt und dabei etwa 12 ml Ethanol abdestilliert. Dann wurde die erhaltene Suspension auf Raumtemperatur abgekühlt, das Produkt abgenutscht, gut mit Ethanol gewaschen und getrocknet. Man erhielt so 67.6 g des Produkts der Formel (VIII).

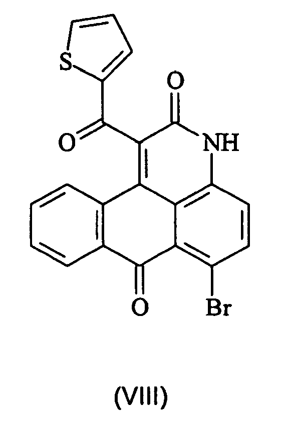

### Herstellung des Farbstoffs (10)

4.8 g (15 mmol) Anilin-2,5-disulfonsäure feucht 80 % (erhältlich bei Bayer AG, Leverkusen, Deutschland), 3.7 g (20 mMol) Tributylamin und 20 ml N-Methylpyrrolidon wurden unter Wasserstrahlvakuum erhitzt und dabei 2 ml bis 3 ml N-Methylpyrrolidon und Wasser abdestilliert.

Zu diesem Gemisch wurden 4.4 g (10 mMol) Bromoanthrapyridon der Formel (VIII), 1.9 g (10 mmol) Tributylamin und 0.2 g Kupfer(II)-acetat zugegeben und das Gemisch anschliessend 48 Stunden bei einer Temperatur von 150° C weitergerührt. Dann wurde das Gemisch auf eine Temperatur von 50° C abgekühlt und klarfiltriert. Der Farbstoff der Formel (10) wurde durch Zugabe von 2.5 g Kaliumacetat und Ethanol ausgefällt und abgenutscht. Der Rohfarbstoff wurde in 30 ml Wasser bei 80° C suspendiert, vom unlöslichen Anteil klarfiltriert und der Farbstoff im Filtrat durch aussalzen mit Kaliumacetat ausgefällt. Man erhielt so 1.2 g des Farbstoffs (10).

Auf ähnliche Art und Weise können durch die Wahl geeigneter Ausgangsmaterialien die erfindungsgemässen Anthrapyridon-Farbstoffe (11) bis (17) hergestellt werden.

### Herstellungsbeispiel für Tinten

Die vorliegende Erfindung wird, soweit sie sich auf Tinten bezieht, durch die folgenden Beispiele beschrieben, in denen erfindungsgemässe Farbstoffe aus Tabelle 1 und Farbstoffe des bisherigen Standes der Technik .100 g jeder Tinte werden hergestellt, indem die benötigte Menge Farbstoff (2 - 6 g), Ethylenglykol (6 g), Propylen-1,2-glykol (3 g), eine wässrige Lösung (50 %) von Olin 10G (erhältlich bei Arch Chemicals Inc., Norwalk, USA) (0.2 g), Surfinol 465 (erhältlich bei Air Products and Chemicals Inc., Allentown, USA) (0.3 g) und eine Biocid-Lösung (Mergal K 10N, erhältlich bei Riedel-de-Haën, Seelze, Deutschland) (0.1 g) zusammen mit Wasser etwa 1 Stunde unter Rühren auf eine Temperatur von 50° C erwärmt werden. Für die Farbstoffe des Stands der Technik müssen aus Löslichkeitsgründen zusätzlich noch 20 g 1-Methyl-2-pyrrolidon zugesetzt werden. Die erhaltene Lösung wird auf eine Temperatur von 20° C abgekühlt und ihr pH-Wert auf 7.5 eingestellt. Anschliessend wird die Lösung durch ein Millipore^{®}-Filter mit 0.5 µm Porendurchmesser abfiltriert. Die Farbstoffmenge wird so gewählt, dass die optische Dichte des bedruckten Bildes für alle Farbstoffe möglichst gleich ist.

### Anwendungsbeispiele von Tinten

Die Tinten wurden anschliessend mit Hilfe eines Tintenstrahldruckers des Typs PIXMA IP 4300 von Canon auf die folgenden Aufnahmematerialen aufgebracht:
1. ILFORD OMNIJET Instant Dry Glossy Photo RC Paper ON3GP8 (nanoporöses Aufzeichnungsmaterial)
   und
2. ILFORD Galerie Classic Gloss Paper IGCGP9 (Aufzeichnungsmaterial auf Polymerbasis)

### Prüfungen

### 1. Farbstofflöslichkeit

Die Farbstofflöslichkeit wird bei einem pH-Wert von 7 in gepufferten wässrigen Lösungen spektroskopisch im sichtbaren Spektralbereich bestimmt. Dazu werden bei einer Temperatur von 50° C gesättigte wässrige Lösungen der Farbstoffe hergestellt. Anschliessend werden diese Lösungen auf eine Temperatur von 20° C abgekühlt und nach einer Wartezeit von 24 Stunden derart verdünnt, dass die Absorption beim Absorptionsmaximum zwischen 0.8 und 1.5 liegt. Auf Grund des Verdünnungsfaktors kann so die Löslichkeit für jeden Farbstoff berechnet werden.

### 2. Farbkoordinaten

L*a*b*-Werte wurden auf bedruckten Mustern mit Hilfe eines Spektrometers Gretag SPM 100, erhältlich bei Gretag AG, Regensdorf, Schweiz, gemessen.

### Ergebnisse

Die gemessenen Löslichkeiten des erfindungsgemässen Anthrapyridon-Farbstoffs (12) sowie des Anthrapyridon-Farbstoffs der Formel (I) des Stands der Technik sind in Tabelle 2 zusammengestellt.

**Tabelle 2**

| Farbstoff Nr. | Löslichkeit in Wasser (Gewichtsprozent) |
|---|---|
| 12 | 13 |
| (I) | 3 |

Ein Vergleich der Ergebnisse in Tabelle 2 zeigt klar, dass der erfindungsgemässe Anthrapyridon-Farbstoff (12) eine viel höhere Wasserlöslichkeit hat als der Farbstoff des Stands der Technik der Formel (I) und deshalb ohne Einschränkung in Tinten für den Tintenstrahldruck verwendet werden kann.

Die mit der Lichtart D65 gemessenen L*a*b*-Werte sind in Tabelle 3 paarweise für die erfindungsgemässen Anthrapyridon-Farbstoffe und für die Anthrapyridon-Farbstoffe des Stands der Technik zusammengestellt.

**Tabelle 3**

| Farbstoff Nr. | L*a*b*-Werte auf Material 1 | L*a*b*-Werte auf Material 2 |
|---|---|---|
| 12 | 79.1 / 30.3 / -18.2 | 50.9 / 70.2 / -29.2 |
| I | 81.4 / 22.7 / -16.1 | 52.7 / 72.3 / -27.5 |

Die Ergebnisse in Tabelle 3 zeigen deutlich, dass der erfindungsgemässe Anthrapyridon-Farbstoff (12) auf beiden Aufzeichnungsmaterialien einen bläulicheren Farbton hat als der Anthrapyridon-Farbstoff der Formel (I) des Stands der Technik. Auf dem nanoporösen Aufzeichnungsmaterial 1 hat der erfindungsgemässe Anthrapyridon-Farbstoff (12) eine deutlich höhere Brillanz als der Anthrapyridon-Farbstoff der Formel (I) des Stands der Technik hat.
Auf dem Aufzeichnungsmaterial 2 auf Polymerbasis hat der erfindungsgemässe Anthrapyridon-Farbstoff (12) etwa die gleiche Brillanz wie der Anthrapyridon-Farbstoff der Formel (I) des Stands der Technik.

## Patentansprüche

1. Anthrapyridon-Farbstoffe der allgemeinen Formel (III) 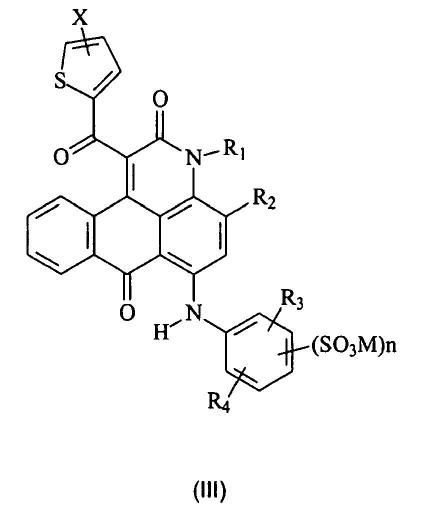 worin
X für Wasserstoff, Chlor, Brom, einen geradkettigen oder verzweigten Alkylrest mit 1 bis 8 Kohlenstoffatomen steht;
R₁ für Wasserstoff, einen geradkettigen oder verzweigten Alkylrest mit 1 bis 8 Kohlenstoffatomen steht,
R₂ für Wasserstoff, SO₃M, Chlor, Brom, einen unsubstituierten oder substituierten aliphatischen Alkoxylrest mit bis zu 12 Kohlenstoffato- men, wobei die Substituenten aus der Gruppe bestehend aus COOM, OH, OCH₃, Halogen, COOCH₃ und COOCH₂CH₃ ausge- wählt werden, oder einen aromatischen Aryloxylrest, wobei die Sub- stituenten aus der Gruppe bestehend aus COOM, SO₃M, OCH₃, Halogen, COOCH₃ und COOCH₂CH₃ ausgewählt werden, steht;
R₃ für Fluor, Chlor, Brom, NH₂, einen Alkylrest oder einen Alkoxylrest mit je 1 bis 6 Kohlenstoffatomen, einen unsubstituierten aliphati- schen Amidrest oder Sulfonamidrest mit bis zu 12 Kohlenstoffato- men oder einen unsubstituierten oder substituierten aromatischen Amidrest oder Sulfonamidrest mit bis zu 20 Kohlenstoffatomen, wo- bei die Substituenten aus der Gruppe bestehend aus COOM, SO₃M, OCH₃, CH₃, CH₂CH₃, Cl, Br, COOCH₃ und COOCH₂CH₃ ausge- wählt werden, stehen;
R₄ für Wasserstoff steht;
n den Wert 2 annimmt
und
M für Wasserstoff, ein Metallkation oder ein Ammoniumkation, das ge- gebenenfalls einen oder mehrere Alkylreste oder substituierte Alkyl- reste oder Hydroxyalkoxyalkylreste mit jeweils 1 bis 18 Kohlenstoff- atomen aufweist, steht.

2. Anthrapyridon-Farbstoffe gemäss Anspruch 1, **dadurch gekennzeichnet, dass**
R₃, R₄, M und n die gleiche Bedeutung wie in Anspruch 1 haben;
X für Wasserstoff, Chlor oder Brom steht;
R₁ für Wasserstoff oder CH₃ steht
und
R₂ für Wasserstoff, SO₃M oder einen Phenoxylrest steht.

3. Anthrapyridon-Farbstoffe gemäss den Ansprüchen 1 und 2, **dadurch gekennzeichnet, dass**
R₄ und n die gleiche Bedeutung wie in Anspruch 1 haben;
X, R₁, und R₂ die gleiche Bedeutung wie in Anspruch 2 haben;
R₃ für Fluor, Chlor, Brom, NH₂, einen Alkylrest oder einen Alkoxylrest mit je 1 bis 4 Kohlenstoffatomen, für einen unsubstituierten aliphati- schen Amidrest oder Sulfonamidrest mit bis zu 12 Kohlenstoffato- men steht
und
M für Wasserstoff, ein Alkalimetallkation (Li, Na oder K), ein Erdalkali- metallkation (Mg oder Ca) oder ein Ammoniumkation, das gegebe- nenfalls einen oder mehrere Alkylreste mit 1 bis 4 Kohlenstoffatomen oder mit OH substituierte Alkylreste mit 1 bis 6 Kohlenstoffatomen aufweist, steht.

4. Verfahren zur Herstellung der Anthrapyridon-Farbstoffe nach Anspruch 1, **dadurch gekennzeichnet, dass**
ein β-Ketoester der allgemeinen Formel (IV) 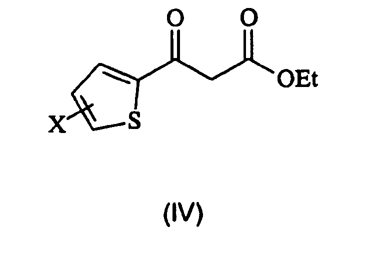 worin X die gleiche Bedeutung wie in Anspruch 1 hat,
mit einer Verbindung der Formel (V), 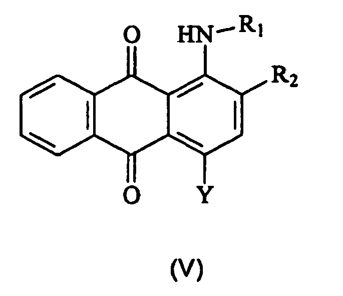 worin R₁ und R₂ die gleiche Bedeutung wie in Anspruch 1 haben
und
Y für Chlor, Brom oder eine andere Abgangsgruppe steht;
unter Bedingungen umgesetzt wird, dass die Anthrapyridone der Formel (VI) gebildet werden, 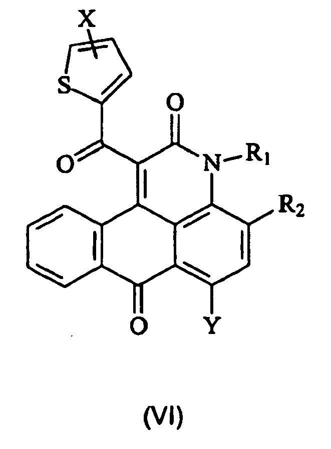 welche anschliessend mit Anilinen der allgemeinen Formel (VII), worin R₃,
R₄ und n die gleiche Bedeutung wie in Anspruch 1 haben, 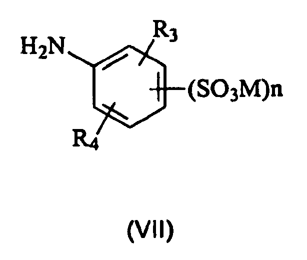 unter Bedingungen umgesetzt werden, dass die Anthrapyridon-Farbstoffe der allgemeinen Formel (III) gebildet werden.

5. Verwendung der Anthrapyridon-Farbstoffe nach einem oder mehreren der Ansprüche 1 bis 3 zum Aufzeichnen von Schrift und Bildern auf einem Aufzeichnungsmaterial, zum Färben und Bedrucken von natürlichen oder synthetischen Fasermaterialen, nanoporösen Materialien, Leder und Aluminium.

6. Flüssige Farbstoffpräparationen, die mindestens einen Anthrapyridon-Farbstoff oder eine Mischung von Anthrapyridon-Farbstoffen nach einem oder mehreren der Ansprüche 1 bis 3 enthalten.

7. Tinten für den Tintenstrahldruck, die mindestens einen Anthrapyridon-Farbstoff oder eine Mischung von Anthrapyridon-Farbstoffen nach einem oder mehreren der Ansprüche 1 bis 3 enthalten.

8. Tinten für den Tintenstrahldruck, die neben mindestens einem Anthrapyridon-Farbstoff oder einer Mischung von Anthrapyridon-Farbstoffen nach einem oder mehreren der Ansprüche 1 bis 3, einen oder mehrere weitere Farbstoffe enthalten.

## Claims

1. Anthrapyridone dyes of general formula (III) 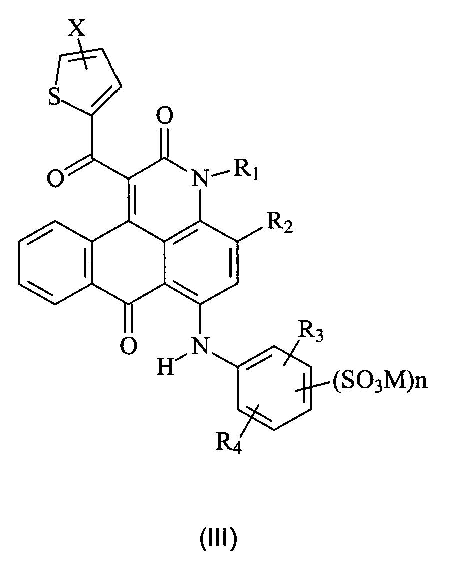 wherein
X represents a hydrogen atom, a chlorine atom, a bromine atom or an unbranched or branched alkyl group having from 1 to 8 carbon at- oms;
R₁ represents a hydrogen atom or an unbranched or branched alkyl group having from 1 to 8 carbon atoms;
R₂ represents a hydrogen atom, an SO₃M group, a chlorine atom, a bromine atom, an unsubstituted or substituted alkoxyl group having up to 12 carbon atoms, where the substituents are selected from the group consisting of COOM, OH, OCH₃, halogen, COOCH₃ and COOCH₂CH₃, or an aromatic aryloxyl group, where the substituents are selected from the group consisting of COOM, SO₃M, OCH₃, halogen, COOCH₃ und COOCH₂CH₃;
R₃ represents a fluorine atom, a chlorine atom, a bromine atom, a NH₂ group, an alkyl group or an alkoxyl group each having from 1 to 6 carbon atoms, an unsubstituted aliphatic amide group or sulphon- amide group having up to 12 carbon atoms or an unsubstituted or substituted aromatic amide group or sulphonamide group having up to 20 carbon atoms, where the substituents are selected from the group consisting of COOM, SO₃M, OCH₃, CH₃, CH₂CH₃, Cl, Br, COOCH₃ and COOCH₂CH₃;
R₄ represents a hydrogen atom;
n is equal to 2
and
M represents a hydrogen atom, a metal cation or an ammonium cation, optionally substituted by one or more alkyl groups or substituted alkyl groups or hydroxyalkoxyalkyl groups each having from 1 to 18 car- bon atoms.

2. Anthrapyridone dyes according to claim 1, **characterised by** the fact that
R₃, R₄, M and n are as defined in claim 1;
X represents a hydrogen atom, a chlorine atom or a bromine atom;
R₁ represents a hydrogen atom or a CH₃ group
and
R₂ represents a hydrogen atom, a SO₃M group or a phenoxy group.

3. Anthrapyridone dyes according to claims 1 and 2, **characterised by** the fact that
R₄ and n are as defined in claim 1;
X, R₁ and R₂ are as defined in claim 2;
R₃ represents a fluorine atom, a chlorine atom, a bromine atom, a NH₂ group, an alkyl group or an alkoxyl group each having from 1 to 4 carbon atoms, an unsubstituted aliphatic amide group or sulphon- amide group having up to 12 carbon atoms
and
M represents a hydrogen atom, an alkali metal cation (Li, Na or K), an alcaline earth metal cation (Mg or Ca) or an ammonium cation, op- tionally substituted by one or more alkyl groups having up to 4 car- bon atoms or substituted alkyl groups or alkyl groups substituted by OH having from 1 to 6 carbon atoms.

4. Method of preparation of the anthrapyridone dyes according to claim 1, **characterised by** the fact that
a β-ketoester of general formula (IV) 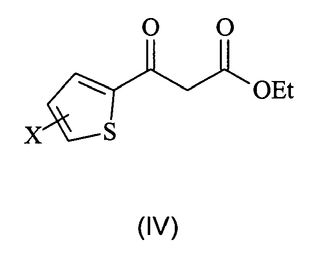 wherein X is defined as in claim 1,
is reacted with a compound of formula (V), 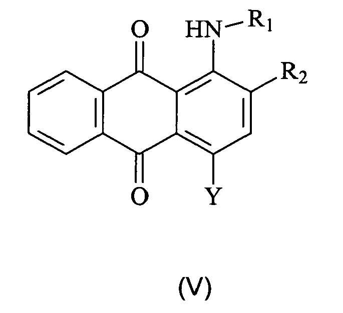 wherein R₁ and R₂ are as defined in claim 1
and
Y represents a chlorine atom,a bromine atom or another leaving group; under conditions that the anthrapyridones of formula (VI) are formed, 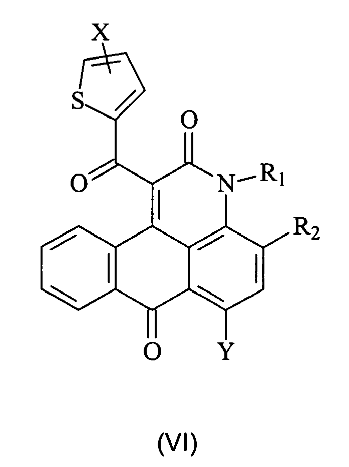 which are subsequently reacted with anilines of general formula (VII), where R₃, R₄ and n are as defined in claim 1, 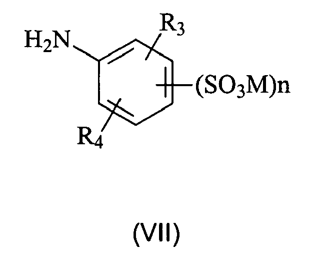 under conditions that the anthrapyridone dyes of general formula (III) are formed.

5. Process for recording text or images on recording sheets and for dyeing and printing of natural or synthetic fibre materials, nanoporous materials, leather and aluminium by applying thereto an anthrapyridone dye according to one or more of claims 1 to 3.

6. Liquid dye preparations comprising at least one anthrapyridone dye or a mixture of anthrapyridone dyes according to one or more of claims 1 to 3.

7. Recording liquids for ink jet printing comprising at least one anthrapyridone dye or a mixture of anthrapyridone dyes according to one or more of claims 1 to 3.

8. Recording liquids for ink jet printing comprising in addition to at least one anthrapyridone dye or a mixture of anthrapyridone dyes according to one or more of claims 1 to 3 one or more other dyes.

## Revendications

1. Colorants anthrapyridones de formule générale (III) 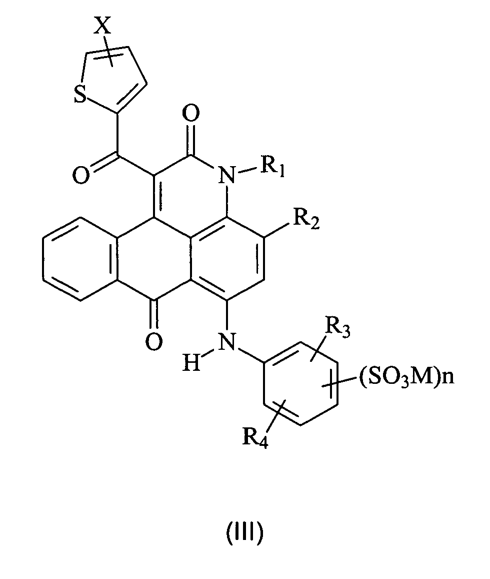 dans laquelle
X représente un atome d'hydrogène, un atome de chlore, un atome de brome ou un radical alkyle non-branché ou branché ayant de 1 à 8 ato- mes de carbone;
R₁ représente un atome d'hydrogène ou un radical alkyle non-branché ou branché ayant de 1 à 8 atomes de carbone;
R₂ représente un atome d'hydrogène, un radical SO₃M, un atome de chlore, un atome de brome, un radical alcoxyle non-substitué ou substi- tué ayant jusqu'à 12 atomes de carbone, dans lequel les substitants sont choisis parmi le groupe constitué du radical COOM, du radical OH, du radical OCH₃, d'un atome d'halogène, du radical COOCH₃ et du ra- dical COOCH₂CH₃, ou un groupe aryloxy aromatique, dans lequel les substitants sont choisis parmi le groupe constitué du radical COOM, du radical OH, du radical OCH₃, d'un atome d'halogène, du radical COOCH₃ et du radical COOCH₂CH₃;
R₃ représente un atome de fluor, un atome de chlore, un atome de brome un radical NH₂, un radical alkyle ou alcoxyle ayant de 1 à 6 atomes de carbone, un radical amide ou sulfonamide aliphatique non-substitué ayant jusqu'à 12 atomes de carbone ou un radical amide ou sulfona- mide aromatique non-substitué ou substitué dans lequel les substitants sont choisis parmi le groupe constitué du radical COOM, du radical SO₃M, du radical OCH₃, du radical CH₃, du radical CH₂CH₃, d'un atome de chlore, d'un atome de brome, du radical COOCH₃ et du radi- cal COOCH₂CH₃;
R₄ représente un atome d'hydrogène;
m vaut 2
et
M représente un atome d'hydrogène, un cation métallique ou un cation ammonium optionnellement substitué par un ou plusieurs radicaux al- kyle ou alkyle substitué ou hydroxyalcoxyalkyle ayant chacun de 1 à 8 atomes de carbone.

2. Colorants anthrapyridones selon la revendication 1, **caractérisé par le fait que**
R₃, R₄, M et n sont définis comme à la revendication 1;
X représente un atome d'hydrogène, un atome de chlore ou un atome de brome;
R₁ représente un atome d'hydrogène ou un radical CH₃
et
R₂ représente un atome d'hydrogène, un radical SO₃M ou un radical phe- noxyle.

3. Colorants anthrapyridones selon les revendications 1 et 2, **caractérisé par le fait que**
R₄ et n sont définis comme à la revendication 1;
X, R₁ et R₂ sont définis comme à la revendication 2;
R₃ représente un atome de fluor, un atome de chlore, un atome de brome un radical NH₂, un radical alkyle ou alcoxyle ayant de 1 à 4 atomes de carbone, un radical amide ou sulfonamide aliphatique non-substitué ayant jusqu'à 12 atomes de carbone
et
M représente un atome d'hydrogène, un cation d'un métal alcalin (Li, Na ou K), un cation d'un métal alcalino-terreux (Mg ou Ca), d'un cation ammonium substitué par un ou plusieurs radicaux alkyle ayant de 1 à 4 atomes de carbone ou radicaux alkyle ayant de 1 à 6 atomes de car- bone substitué par un groupe hydroxyle.

4. Procédé de préparation des colorants anthrapyridones selon la revendication 1, **caractérisé par le fait que**
un β-ketoester de formule générale (IV) 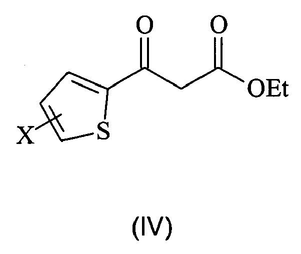 dans laquelle X est défini comme à la revendication 1,
est condensé avec un composé de formule (V), 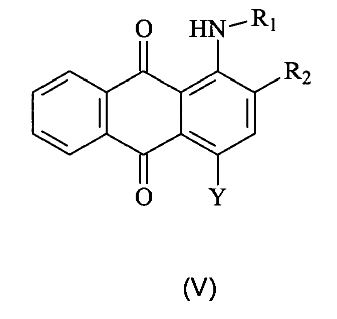 dans laquelle R₁ et R₂ sont définis comme à la revendication 1
et
Y représente un atome de chlore, un atome de brome ou un autre groupe de départ,
dans des conditions sous lesquelles les anthrapyridones de formule (VI) sont formées, 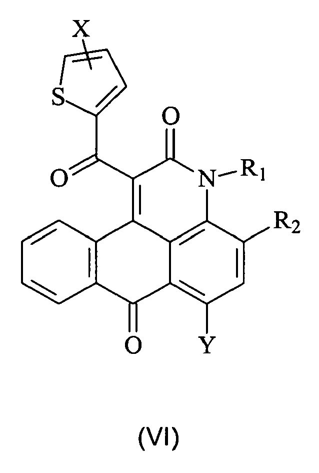 et ces anthrapyridones de formule (VI) sont alors traitées avec des alinines de formule générale (VII),
dans laquelle R₃, R₄ et n sont définis comme à la revendication 1, 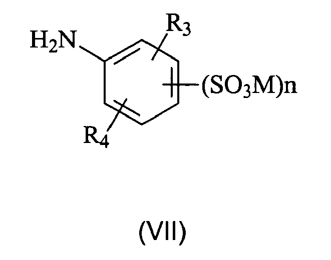 dans des conditions conduisant aux colorants anthrapyridones de formule générale (III).

5. Utilisation des colorants anthrapyridones selon une ou plusieurs des revendications 1 à 3 pour l'enregistrement de caractères ou d'images sur des feuilles d'enregistrement, pour la teinture et l'impression de matériaux fibreux naturels ou synthétiques, de matériaux nanoporeux, du cuir et d'aluminium.

6. Préparations liquides de colorants qui comprennent ou moins un colorant anthrapyridone ou un mélange de colorants anthrapyridones selon une ou plusieurs des revendications 1 à 3.

7. Encres d'impression selon la méthode du jet d'encre qui comprennent ou moins un colorant anthrapyridone ou un mélange de colorants anthrapyridones selon une ou plusieurs des revendications 1 à 3.

8. Encres d'impression selon la méthode du jet d'encre qui comprennent un ou plusieurs colorants supplémentaires, à côté d'au moins un colorant anthrapyridone ou un mélange de colorants anthrapyridones selon une ou plusieurs des revendications 1 à 3.
